# EUROPEAN PATENT APPLICATION

(11) **EP 1 927 835 A2**
(43) Date of publication of application: **04.06.2008**
(21) Application number: 07121994.3
(22) Date of filing: 30.11.2007
(51) Int. Cl.: G01L 23/10

(54) **Combustion pressure sensor**

(30) Priority: 01.12.2006 JP 2006325608
(71) Applicant: Denso Corporation, Kariya-city, Aichi-pref., 448-8661 (JP)
(72) Inventor: Hirose, Yoshinobu, Kariya-city Aichi 448-8661 (JP); Watarai, Takehiro, Kariya-city Aichi 448-8661 (JP)
(74) Representative: TBK-Patent

(57) **Abstract**

A combustion pressure sensor (1) for detecting a pressure in the combustion chamber (61) of an internal combustion engine includes a seal member (5) sealing a clearance (11) between a housing (2) and a pressure transmitting member (3) slidably inserted through an axial hole (22) of the housing. The seal member is fixed to the housing at a position forward of a load detecting section (4) disposed between the housing and the pressure transmitting member. The seal member is not fixed to the pressure transmitting member.

## Description

The present invention relates to a combustion pressure sensor for detecting the combustion pressure in a combustion chamber of an internal combustion engine such as diesel engine.

Combustion pressure sensors mountable to an internal combustion engine such as diesel engine for detecting the combustion pressure in a combustion chamber of the internal combustion engine are known and used heretofore. One example of such known combustion pressure sensors is disclosed in Japanese Patent Application Publication JP 2005-090954 A (corresponding to US 2005/0061063 A1). As shown in FIG. 10 hereof, the disclosed combustion pressure sensor 9 includes a pressure transmitting member 91 slidably displaceable in the axial direction relative to a housing 92 to thereby transmit a pressure developed in the combustion chamber to a pressure sensor 93 which is disposed on a rear end of the combustion pressure sensor 9 for detecting the combustion pressure in the combustion chamber.

In order to prevent entry of hot combustion gas from between the pressure transmitting member 91 and the housing 92, the combustion pressure sensor 9 further has an O-ring 94 and a membrane 95. To this end, the O-ring 94 and the membrane 95 are arranged to tightly block or seal a clearance between the pressure transmitting member 91 and the housing 92. The membrane 95 is rigidly connected by welding to both the housing 92 and the pressure transmitting member 91 so that the hot combustion gas can be trapped within a front end portion of the housing 92.

With this arrangement, however, due to contraction in shape of the housing 99 that may occur in the axial direction of the housing 92 when the combustion pressure sensor 9 is mounted to the internal combustion engine, the pressure transmitting member 91, which is rigidly connected to the housing 92 via the membrane 95, is also displaced in the axial direction relative to the housing 92. As a consequence of this displacement, a force or pressure is transmitted to the pressure sensor 93, which will cause an unwanted change in sensor output. This may lead to fluctuation in the initial value of the combustion pressure sensor 9 and deterioration of the sensor accuracy. To secure application to the engine control purposes, the combustion pressure sensor 9 requires correction using another sensor, which will incur additional cost. In some cases, engine control becomes difficult to achieve.

With the foregoing difficulties in view, an object of the present invention is to provide a combustion pressure sensor having good detection accuracy and durability.

According to the invention, there is provided a combustion pressure sensor for detecting a combustion pressure in a combustion chamber of an internal combustion engine, comprising: a hollow cylindrical housing mountable to the internal combustion engine in such a manner that a front end portion of the hollow cylindrical housing is located in front of the combustion chamber; a pressure transmitting member slidably inserted through an axial hole of the hollow cylindrical housing such that a pressure-receiving front end portion of the pressure transmitting member protrudes from the front end portion of the housing into the combustion chamber for transmitting a combustion pressure in the combustion chamber; a load detecting section disposed between the housing and the pressure transmitting member for detecting variations in load acting between the housing and the load transmitting member; and a seal member fixed to the housing at a position forward of the load detecting section and sealing a clearance between the housing and the pressure transmitting member, wherein the seal member is not fixed to the pressure transmitting member.

With this arrangement, since the combustion pressure sensor 1 has the seal member disposed between the housing and the pressure transmitting member to seal the clearance therebetween, it is possible to prevent combustion gas in the combustion chamber from entering the clearance between the housing and the pressure transmitting member, which would otherwise result in undue temperature rise within the housing. Thermal loads on the load detecting section, which is disposed between the housing and the pressure transmitting member, can thus be reduced. The combustion pressure sensor as a whole is highly durable in construction.

Furthermore, the seal member is not fixed to the pressure transmitting member and the pressure transmitting member is slidable relative to the housing. With this arrangement, even when the housing is deformed into an axially contracted configuration due to a load acting in the axial direction of the housing when the combustion pressure sensor is mounted to the internal combustion engine, it is possible to prevent a load induced by the deformation of the housing from transmitting to the load detecting section. More specifically, since the seal member is not fixed to the pressure transmitting member and since the pressure transmitting member is slidable relative to the housing, a deformation of the housing can never be transferred to an axial displacement of the pressure transmitting member. As a result, the load detecting section is completely free from the effect of a stress created due to deformation of the housing.

Thus, an unwanted change in the sensor output, which might otherwise occur at the time of mounting the combustion pressure sensor to the engine head portion, can be avoided. The combustion pressure sensor is therefore able to retain the desired detection accuracy. In performing engine control operation, the combustion pressure sensor does not require correction using another sensor and hence is able to provide a certain reduction of cost.

Furthermore, the seal member fixed to the housing without displacement relative to the housing is able to reliably seal the clearance between the housing and the pressure transmitting member.

The term "front side" is used herein to refer to a side of the combustion pressure sensor from which the combustion pressure sensor is inserted in the combustion chamber of the internal combustion engine. Accordingly, the term "rear side" is used herein to refer to a rear side of the combustion pressure sensor, which is opposite to the front side.

Preferably, the seal member is made of a heat-transfer material such as stainless steel.

In one preferred form of the invention, the seal member defines together with the pressure transmitting member a very small clearance forming a path interconnecting the combustion chamber and the axial hole of the housing.

The thus provided very small clearance is highly effective to prevent a deformation of the housing from being transmitted to the load detecting section by way of a displacement of the pressure transmitting member. This leads to a further improvement in the detection accuracy of the combustion pressure sensor.

The very small clearance is variable in size depending on various conditions, however, it is preferable that this clearance is less than or equal to 20 µm because it can provide a sufficient block against infiltration of the combustion into the housing to thereby suppress thermal loads on the load detecting section and improve the detection accuracy.

Preferably, the very small clearance has at lest one bent portion disposed in a path interconnecting the combustion chamber and the axial hole of the housing. By virtue of the bent portions provided in the very small clearance, it is possible to effectively prevent combustion gas in the combustion chamber from entering into the axial hole of the housing. More specifically, due to a large pressure loss produced when the combustion gas passes through the very small clearance including the bent portions, infiltration of the combustion gas from the combustion chamber into the housing can be effectively prevented. By thus providing the bent portions, the clearance is allowed to have a larger size, which is highly effective to eliminate the risk of transmission of a deformation of the housing to the load detecting section via a displacement of the pressure transmitting member. This contributes to further improvement in the detection accuracy of the combustion pressure sensor.

Alternatively, the seal member may be in contact with the pressure transmitting member. In this instance, it is preferable that a contact pressure between the seal member and the pressure transmitting member is set to be low enough to allow sliding movement of the pressure transmitting member relative to the housing.

Preferably, the seal member has a resilient portion urged into pressure contact with the pressure transmitting member. With the resilient portion thus provided, the seal member is able to reliably seal the clearance between the pressure transmitting member and the housing while keeping a properly adjusted contact pressure acting between the seal member and the pressure transmitting member. It is preferable that the resilient portion has a resiliency determined such that the contact pressure acting between the seal member and the pressure transmitting member provides a hermetic seal between the seal member and the pressure transmitting member while allowing smooth sliding movement of the pressure transmitting member relative to the housing.

Preferably, the seal member has a bellows-shaped portion at a part thereof. With this arrangement, since the bellows-shaped portion is able to take up or absorb a deformation of the housing even when the seal member is in contact with the pressure transmitting portion, a displacement of the pressure transmitting member resulting from the deformation of the housing does not take place. The desired detection accuracy can thus be maintained.
FIG. 1 is a longitudinal cross-sectional view of a combustion pressure sensor according to a first embodiment of the present invention;
FIG. 2 is an enlarged view of a portion of FIG. 1 including a seal member disposed between a housing and a pressure transmitting member with a very small clearance defined between the seal member and the pressure transmitting member;
FIG. 3 is a view similar to FIG. 2 but showing a modification in which the seal member is disposed in pressure contact with the pressure transmitting member;
FIG. 4 is a longitudinal cross-sectional view of a portion of a combustion pressure sensor according to a second embodiment of the present invention, including a pressure transmitting member having an annular projection or flange;
FIG. 5 is a view similar to FIG. 4 but showing a modification in which the pressure transmitting member has a stepped portion in place of the annular flange;
FIG. 6 is a longitudinal cross-sectional view of a portion of a combustion pressure sensor according to a third embodiment of the present invention, including a seal member having a resilient portion bent into sealing contact with the pressure transmitting member;
FIG. 7 is a longitudinal cross-sectional view of a portion of a combustion pressure sensor according to a fourth embodiment of the present invention, including a seal member having a sealing portion disposed within an axial hole of the housing;
FIG. 8 is a longitudinal cross-sectional view of a portion of a combustion pressure sensor according to a fifth embodiment of the present invention, including a seal member having a sealing portion disposed within an axial hole of the hosing and fitted around a part of the pressure transmitting member including an annular flange;
FIG. 9 is a longitudinal cross-sectional view of a portion of a combustion pressure sensor according to a sixth embodiment of the present invention, including a seal member having a sealing portion disposed within an axial hole of the hosing and having a bellows-like portion; and

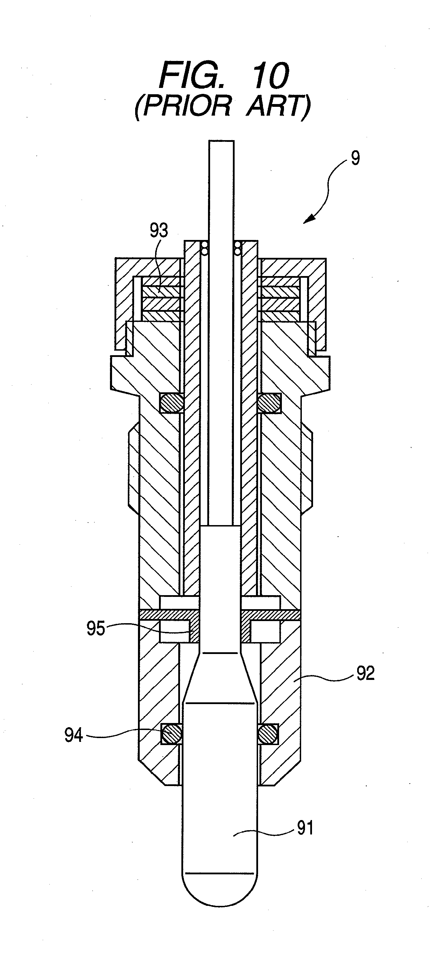

FIG. 10 is a longitudinal cross-sectional view of a conventional combustion pressure sensor.

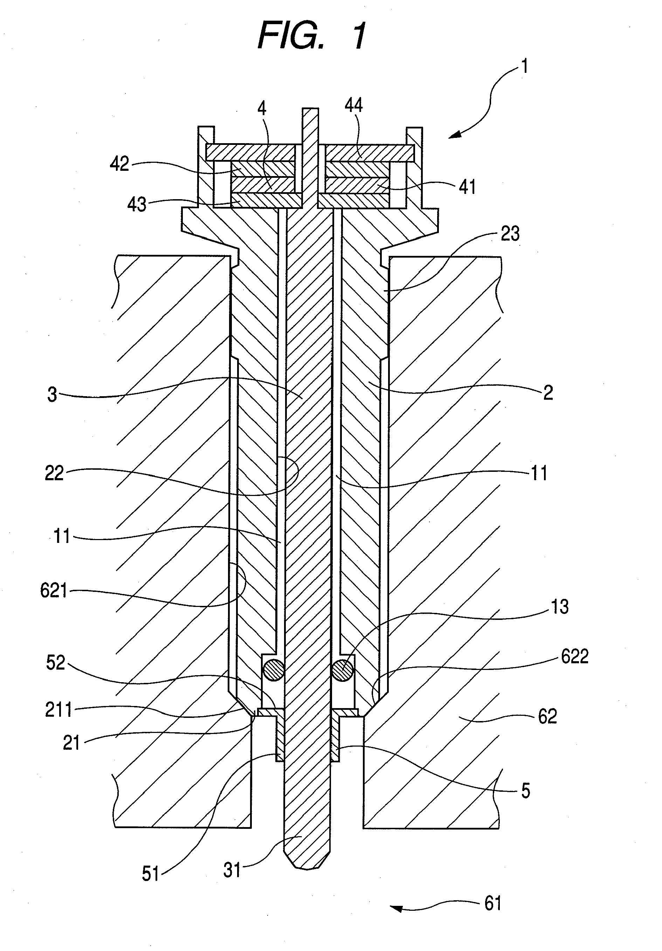

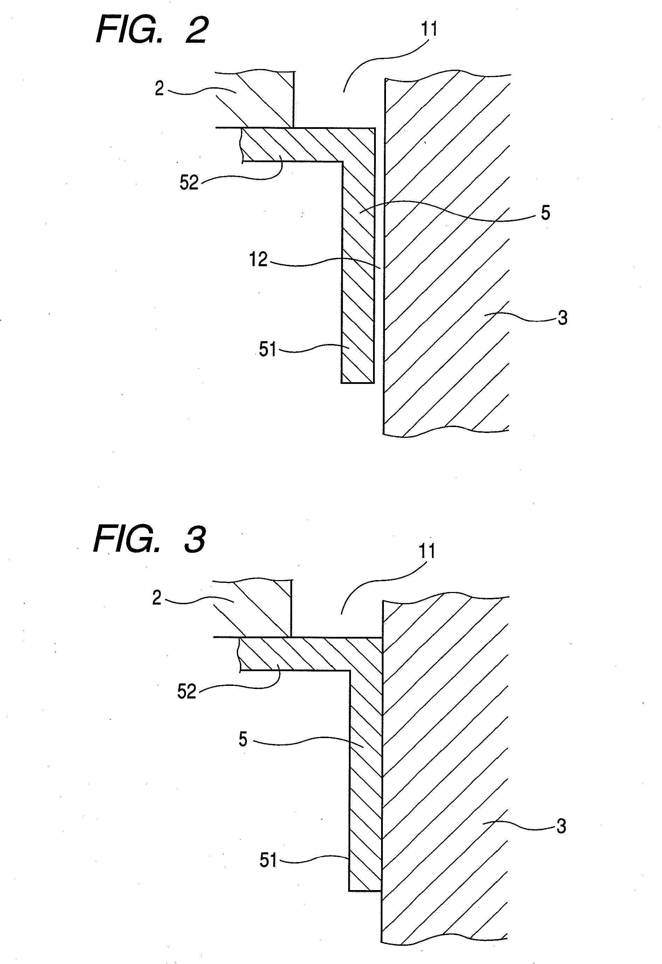

Referring now to the drawings and FIGS. 1 and 2 in particular, there is shown a combustion pressure sensor 1 according to a first embodiment of the present invention. As shown in FIG. 1, the combustion pressure sensor 1 is used for the detection of the combustion pressure in a combustion chamber 61 of an internal combustion engine such as diesel engine. To this end, the combustion pressure sensor 1 generally comprises a housing 2, a pressure transmitting member 3, a load detecting section 4, and a seal member 5.

The housing 2 is a hollow cylindrical member adapted to be mounted to the internal combustion engine in such a manner that a front end portion 21 of the hollow cylindrical housing 2 is disposed in front of, or directed toward, the combustion chamber 61.

The pressure transmitting member 3 is an elongated rod-like member slidably inserted through an axial hole 22 of the hollow cylindrical housing 2 such that a pressure-receiving front end portion 31 of the rod-like pressure transmitting member 3 protrudes from the front end portion 21 of the housing 2 into the combustion chamber 61 for transmitting a combustion pressure in the combustion chamber 61 to the load detecting section 4.

The load detecting section 4 is disposed between the housing 2 and the pressure transmitting member 3 for detecting variations in load acting between the housing 2 and the pressure transmitting member 3.

The seal member 5 is fixed to the housing 2 at a position located forward of the load detecting section 4 and seals a clearance 11 between the housing 2 and the pressure transmitting member 3.

The seal member 5 may be made of a heat-transfer material such as stainless steel. The seal member 5 has a sealing portion 51 facing an outer circumferential surface of the pressure transmitting member 3 and having a shape complementary in contour to the shape of the outer circumferential surface of the pressure transmitting member 3, and an annular attachment portion 52 integral with and extending radially outward from one end (upper end in FIG. 1) of the sleeve-shaped sealing portion 51. At the attachment portion 52 the seal member 5 is fixedly connected, for example, by welding to the front end portion 21 of the housing 2.

As shown in FIG. 2, the seal member 5 defines, together with the pressure transmitting member 3, a very small clearance 12. The clearance 12 forms a path interconnecting the combustion chamber 61 and the axial hole 22 of the housing 2. The clearance 12 is variable in size depending on various conditions, however, it is preferable that this clearance 12 is less than or equal to 20 µm because it can provide a sufficient block against infiltration of the combustion into the housing 2 to thereby suppress thermal loads on the load detecting section 4 and improve the detection accuracy.

Referring back to FIG. 1, the combustion pressure sensor 1 further includes a retainer ring 13 disposed between the housing 2 and the pressure transmitting member 3 for retaining the pressure transmitting member 3 in a predetermined position within the axial hole 22 of the housing 2.

The combustion pressure sensor 1 is inserted through an engine head portion 62 of the internal combustion engine (diesel engine, for example) and firmly secured to the engine head portion 62. The engine head portion 62 has a mounting hole 621 for mounting the combustion pressure sensor 1 to the engine head portion 62. The mounting hole 621 has a tapered portion 622 for abutment with the front end portion 21 of the housing 2 of the combustion pressure sensor 1. The combustion pressure sensor 1 has a beveled portion 211 formed on an outer circumferential surface of the front end portion 21 of the housing 2, and an externally threaded portion 23 formed on the outer peripheral surface of a rear end portion of the housing 2. The engine head portion 62 has an internally threaded portion (not designated) formed on a read end portion (upper end portion in FIG. 1) of a circumferential wall of the mounting hole 621. The externally threaded portion 23 of the housing 2 is threaded with the internally threaded portion of the engine head portion 62 with the beveled portion 211 of the housing front end portion 21 held in abutment with the tapered portion 622 of the mounting hole 621, so that the combustion pressure chamber 1 is mounted to the engine head portion 62.

The load detecting section 4 is formed by a detecting element 41 which produces an electric signal during detection of combustion within the combustion chamber 61, and a pair of electrode plates 42 and 43 disposed in sandwiching relation to the detecting element 41 for taking out the electric signal produced by the detecting element 41. A holder member 44 is disposed on a rear side of the load detecting section 4 (which is directed away from the combustion chamber 61) for holding the load detecting section 4 in position on the rear end of the housing 2. In order to improve the sensitivity of the load detecting section 4 (i.e., to make the load detecting section 4 sensitive to variations in load that may occur during detection of combustion pressure), the detecting element 41 and the electrode plates 42, 43 are initially held under a preloaded condition with a compressive force or load applied thereto from the holder member 44.

The combustion pressure sensor 1 of the foregoing construction operates as will be discussed below.

The pressure-receiving front end portion 31 of the pressure transmitting member 3 is subjected to a combustion pressure generated during combustion of an air-fuel mixture within the combustion chamber 61, whereupon the pressure transmitting member 3 is displaced in the axial direction toward the rear end (upper end in FIG. 1) of the combustion pressure sensor 1, thereby transmitting the combustion pressure to the load detecting section 4. With the combustion pressure thus transmitted, the initial compressive load applied in advance to the load detecting section 4 is caused to vary and the load detecting section 4 generates an output signal corresponding to the transmitted combustion pressure. The detecting element may use a piezoelectric element in which instance since the piezoelectric element produces a voltage or charge corresponding to a change in load applied thereto, the load detecting section 4 is able to produce an output nearly proportional to the combustion pressure.

Heat of high-temperature combustion gas generated during combustion is prevented from entering the housing 2 by means of the seal member 5, so that undue temperature rise does not occur within the housing 2. This enables that the effect of thermal loads on the load detecting section 4 disposed on the rear end of the housing 2 can be reduced.

Various advantageous effects achieved by the combustion pressure sensor 1 of the first embodiment of the present invention will be enumerated as follows.

Since the combustion pressure sensor 1 has the seal member 5 disposed between the housing 2 and the pressure transmitting member 3 to seal the clearance 11 therebetween, it is possible to prevent combustion gas in the combustion chamber 61 from entering the clearance 11 between the housing 2 and the pressure transmitting member 3, which would otherwise cause undue temperature rise within the housing 2. Thermal loads on the load detecting section 4, which is disposed between the housing 2 and the pressure transmitting member 3, can thus be reduced. The combustion pressure sensor 1 as a whole is highly durable in construction.

Furthermore, the seal member 5 is not fixed to the pressure transmitting member 3 and the pressure transmitting member 3 is slidable relative to the housing 2. With this arrangement, even when the housing 2 is deformed into an axially contracted configuration due to a load acting in the axial direction of the housing 2 when the combustion pressure sensor 1 is mounted to the internal combustion engine, it is possible to prevent a load induced by the deformation of the housing 2 from transmitting to the load detecting section 4. More specifically, since the seal member 5 is not fixed to the pressure transmitting member 3 and since the pressure transmitting member 3 is slidable relative to the housing 2, a deformation of the housing 2 can never be transferred to an axial displacement of the pressure transmitting member 3. As a result, the load detecting section 4 is completely free from the effect of a stress created due to deformation of the housing 2.

It will be appreciated that in the combustion pressure sensor 1 of the invention, an unwanted change in the sensor output, which might otherwise occur at the time of mounting the combustion pressure sensor 1 to the engine head portion 62, can be avoided. The combustion pressure sensor 1 is therefore able to retain the desired detection accuracy. In performing engine control operation, the combustion pressure sensor 1 does not require correction using another sensor and hence is able to provide a certain reduction of cost.

Furthermore, the seal member 5, which is fixed to the housing 2 without displacement relative to the housing 2, is able to reliably seal the clearance between the housing 2 and the pressure transmitting member 3. Additionally, due to the presence of the very small clearance 12 (FIG. 2) defined between the seal member 5 and the pressure transmitting member 3, the seal member 5 can effectively prevent a deformation of the housing 2 from being transmitted to the load detecting section 4 by way of a displacement of the pressure transmitting member 3. This arrangement leads to a further improvement in the detection accuracy of the combustion pressure sensor 1.

It will be appreciated from the foregoing that the combustion pressure sensor 1 according to the first embodiment of the present invention excels in detection accuracy and durability.

FIG. 3 shows a modification of the first embodiment shown in FIGS. 1 and 2. The modified combustion pressure sensor differs from the one 1 of the first embodiment in that the seal member 5 is in pressure contact with the pressure transmitting member 3 without a clearance defined therebetween. The contact pressure between the seal member 5 and the pressure transmitting member 3 is set to be low enough to allow sliding movement of the pressure transmitting member relative to the housing 2.

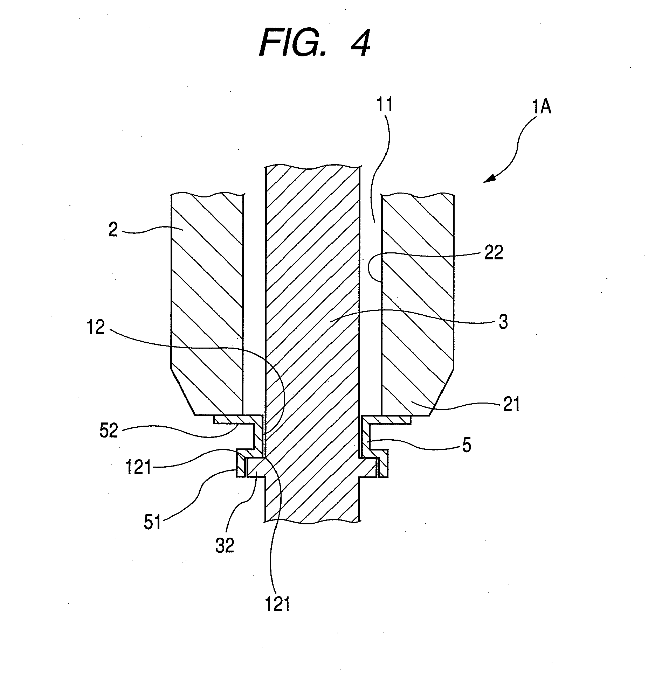

FIG. 4 shows in longitudinal cross section a portion of a combustion pressure sensor 1A according to a second embodiment of the present invention. The combustion pressure sensor 1A differs from the combustion pressure sensor 1 of the first embodiment shown in FIGS. 1 and 2 in that the very small clearance 12 defined between the seal member 5 and the pressure transmitting member 3 has bent portions 121 disposed in a path interconnecting the combustion chamber 61 and the axial hole 22 of the housing 2.

As shown in FIG. 4, the combustion pressure sensor 1A includes a pressure transmitting member 3 having an annular flange or projection 32 on its outer circumferential surface thereof, and a seal member 5 having a sealing portion bent along the annular projection 32. With this arrangement, the very small clearance 12 has two bent portions 121, 121 disposed in the path interconnecting the combustion chamber 61 (see FIG. 1) and the axial hole 22 of the housing 2.

Other structural parts of the combustion pressure sensor 1A of the second embodiment are the same as those of the combustion pressure sensor 1 of the first embodiment described above with reference to FIGS. 1 and 2, and further description thereof can be omitted.

In the second embodiment shown in FIG. 4, by virtue of the bent portions 121 provided in the very small clearance 12, it is possible to effectively prevent combustion gas from flowing from the combustion chamber 61 into the axial hole 22 of the housing 2. Stated more specifically, due to a large pressure loss produced when the combustion gas passes through the very small clearance 12 including the bent portions 121, infiltration of the combustion gas from the combustion chamber 61 (see FIG. 1) into the housing 2 can be effectively prevented.

Furthermore, the bent portions 121 allow the clearance 12 to be larger in size than the straight bent-free clearance 12 of the first embodiment shown in FIG. 2. With this enlargement of the clearance 12, it is possible to sufficiently eliminate the risk of transmission of a deformation of the housing 2 to the load detecting section 4 via a displacement of the pressure transmitting member 3. This contributes to further improvement in the detection accuracy of the combustion pressure sensor 1A.

Other functional effects attainable by the combustion pressure sensor 1A of the second embodiment are the same as those described above with reference to the first embodiment shown in FIGS. 1 and 2.

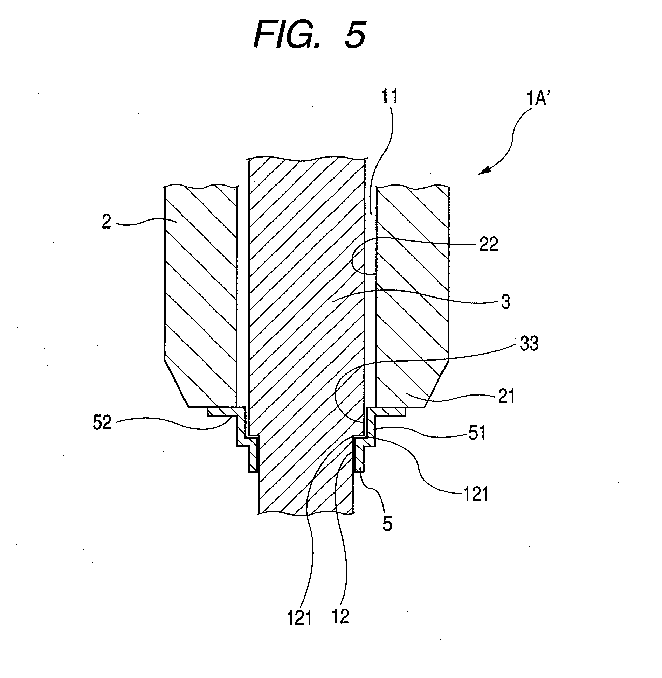

FIG. 5 shows a modification of the second embodiment shown in FIG. 4. The modified combustion pressure sensor 1A' includes a pressure transmitting member 3 having a stepped portion 33 on its outer circumferential surface, and a seal member 5 having a sealing portion 51 bent along the stepped portion, so that a vary small clearance 12 defined between the seal member 5 and the pressure transmitting member 3 have two bent portions 121, 121 disposed in the pass interconnecting the combustion chamber 61 (see FIG. 1) and the axial hole 22 of the housing 2. It is obvious that the modified compression pressure sensor 1A' can achieve the same functional effects as the compression pressure sensor 1A of FIG. 4.

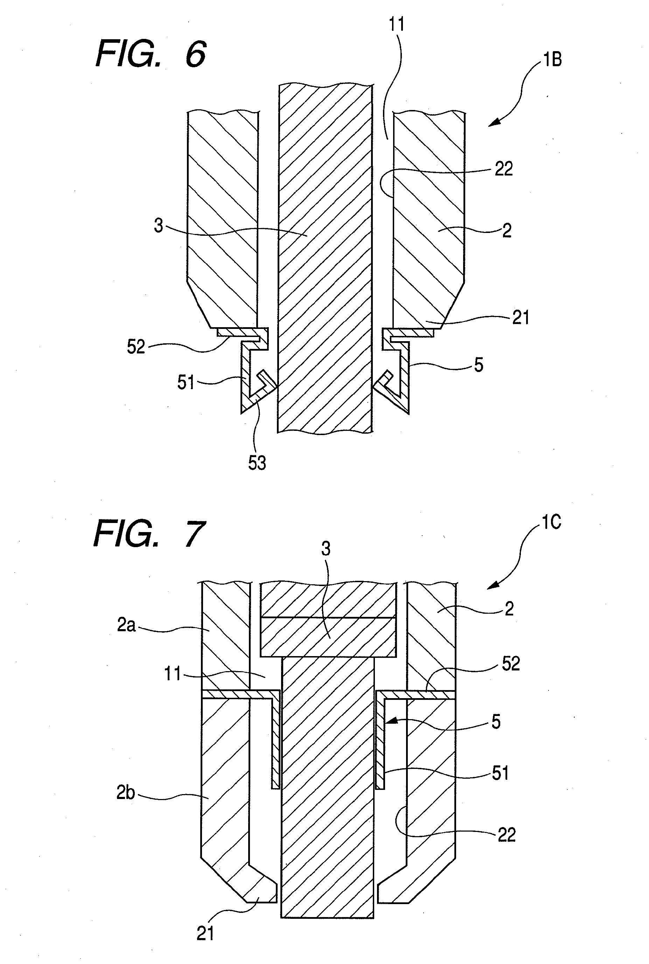

FIG. 6 shows in longitudinal cross section a portion of a combustion pressure sensor 1B according to a third embodiment of the present invention. As shown in this figure, the combustion pressure sensor 1B includes a seal member 5 having a resilient portion 53 urged into pressure contact with an outer circumferential surface of the pressure transmitting member 3. The resilient portion 53 is formed at a lower end of the sealing portion 51, which is opposite to the annular attachment portion 52. The resiliency of the resilient portion 53 is determined such that a contact pressure acting between the seal member 5 and the pressure transmitting member 3 provides a hermetic seal between the seal member 5 and the pressure transmitting member 3 but does not hinder smooth sliding movement of the pressure transmitting member 3 relative to the housing 2.

Other structural parts of the combustion pressure sensor 1B of the third embodiment are the same as those of the combustion pressure sensor 1 of the first embodiment described above with reference to FIGS. 1 and 2, and further description thereof can be omitted.

In the third embodiment shown in FIG. 6, by virtue of the resilient portion 53, the seal member 5 is able to reliably seal the clearance 11 between the pressure transmitting member 3 and the housing 2 while keeping a properly adjusted contact pressure acting between the seal member 5 and the pressure transmitting member 3.

Other functional effects attainable by the combustion pressure sensor 1B of the third embodiment are the same as those described above with reference to the first embodiment shown in FIGS. 1 and 2.

FIG. 7 shows in longitudinal cross section a portion of a combustion pressure sensor 1C according to a fourth embodiment of the present invention. As shown in this figure, the combustion pressure sensor 1C includes a seal member 5 disposed in an axial hole 22 of a housing 2.

The seal member 5 has a sleeve-shaped sealing portion 51 facing an outer circumferential surface (side surface) of a rod-like pressure transmitting member 3, and an annular attachment portion 52 fixed to the housing 2 at a position located forward of the load detecting section 4. The housing 2 has an upper portion 2a and a lower portion 2b connected together with the annular attached portion 52 of the seal member 5 firmly gripped therebetween.

Other structural parts of the combustion pressure sensor 1C of the fourth embodiment are the same as those of the combustion pressure sensor 1 of the first embodiment described above with reference to FIGS. 1 and 2, and further description thereof can be omitted.

The combustion pressure sensor 1C according to the fourth embodiment also has excellent durability and detection accuracy, which are comparable to those of the combustion pressure sensor 1 of the first embodiment shown in FIGS. 1 and 2.

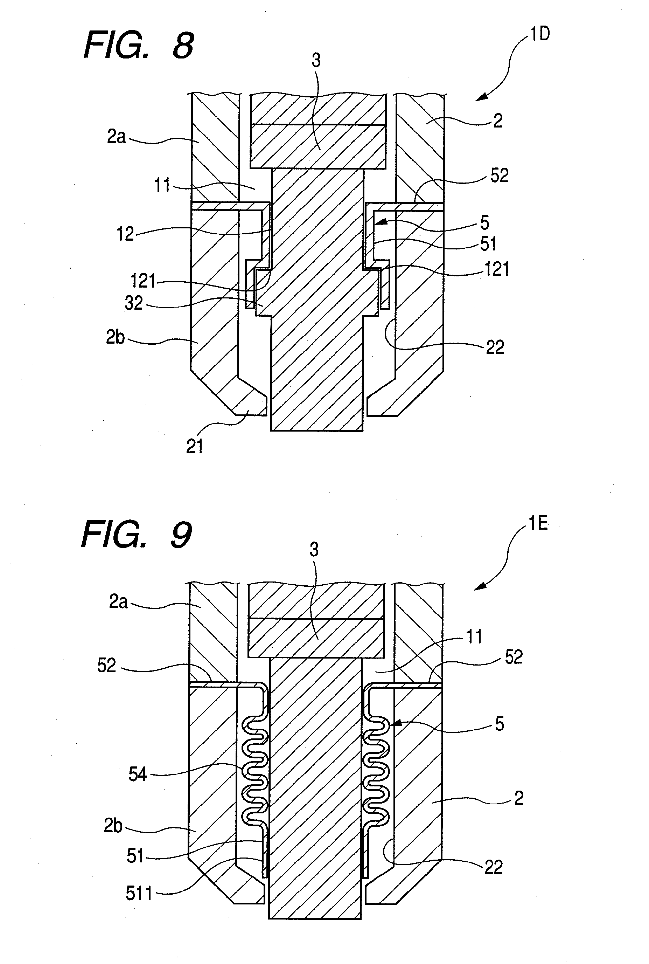

FIG. 8 shows in longitudinal cross section a portion of a combustion pressure sensor ID according to a fifth embodiment of the present invention. As shown in this figure, the combustion pressure sensor ID includes a seal member 5 disposed in an axial hole 22 of a housing 1, and a very small clearance 12 defined between the seal member 5 and a pressure transmitting member 3 has two bent portions 121, 121 disposed in a path interconnecting a combustion chamber 61 (see FIG. 1) and the axial hole 22 of the housing 2.

In this embodiment, the pressure transmitting member 3 has an annular flange or projection 32 formed on an outer circumferential surface (side surface) thereof, and the seal member 5 has a seal portion 51 bent along the annular projection 32, so that the bent portions 121 are disposed in the path interconnecting the combustion chamber 61 and the axial hole 22 of the housing 2.

Other structural parts of the combustion pressure sensor 1D of the fifth embodiment are the same as those of the combustion pressure sensor 1A of the second embodiment described above with reference to FIG. 4, and further description thereof can be omitted.

It will be readily appreciated that the combustion pressure sensor 1D of the fifth embodiment has detection accuracy and durability, which are comparable to those of the combustion pressure sensor 1A of the second embodiment shown in FIG. 4.

FIG. 9 shows in longitudinal cross section a portion of a combustion pressure sensor 1E according to a sixth embodiment of the present invention. As shown in this figure, the combustion pressure sensor 1E includes a seal member 5 having a bellows-shaped portion 54 for absorbing a deformation of the housing 2.

More specifically, the seal member 5 includes a generally sleeve-like sealing portion 51 facing an outer circumferential surface (side surface) of a pressure transmitting portion 3, and an annular attachment portion 52 integral with and extending radially outward from an upper end of the sealing portion 51. The seal member 5 is disposed in the axial hole 22 of the housing 2 with the attachment portion 52 fixed to the housing 2. The bellows-shaped portion 54 is formed as an integral part of the sleeve-like sealing portion 51 and disposed between the annular attachment portion 52 and a straight part 511 of the sealing portion 51, which is disposed forward of the bellows-shaped portion 54. The straight part 511 is in contact with the outer circumferential surface of the pressure transmitting member 3. The inside surface of the bellows-shaped portion 54 is in sliding contact with the outer circumferential surface of the pressure transmitting member 3.

Other structural parts of the combustion pressure sensor 1E of the sixth embodiment are the same as those of the combustion pressure sensor 1C of the fourth embodiment described above with reference to FIG. 7, and further description thereof can be omitted.

In the sixth embodiment shown in FIG. 9, the seal member 5 is in contact with the pressure transmitting member 3 at the straight part 511 of the sealing portion 51. With this arrangement, however, since a deformation of the housing 2 is taken up or absorbed by the bellows-shaped portion 54 of the seal member 5, a displacement of the pressure transmitting member 3 resulting from the deformation of the housing 2 does not take place. The combustion pressure sensor 1E can thus process a desired degree of measurement accuracy.

Obviously, other functional efforts attained by the combustion pressure sensor 1E of the sixth embodiment are the same as those described above with reference to the forth embodiment shown in FIG. 7, and no further description thereof is needed.

The combustion pressure sensors 1, 1A, 1B, 1C, 1D and 1E of the foregoing embodiments may incorporate a glow plug function. In this instance, the pressure transmitting member 3 of the combustion pressure sensor is formed with an axial hollow portion in which a heat generating member and lead wires for energizing the heat generating member are disposed. By thus integrating a combustion pressure detecting function and the glow plug function into a single component, it is possible to achieve substantive cost reduction, space saving, and easy assembly.

A combustion pressure sensor (1) for detecting a pressure in the combustion chamber (61) of an internal combustion engine includes a seal member (5) sealing a clearance (11) between a housing (2) and a pressure transmitting member (3) slidably inserted through an axial hole (22) of the housing. The seal member is fixed to the housing at a position forward of a load detecting section (4) disposed between the housing and the pressure transmitting member. The seal member is not fixed to the pressure transmitting member.

## Claims

1. A combustion pressure sensor for detecting a combustion pressure in a combustion chamber (61) of an internal combustion engine, comprising:
a hollow cylindrical housing (2) mountable to the internal combustion engine in such a manner that a front end portion (21) of the hollow cylindrical housing (2) is located in front of the combustion chamber (61);
a pressure transmitting member (3) slidably inserted through an axial hole (22) of the hollow cylindrical housing (2) such that a pressure-receiving front end portion (31) of the pressure transmitting member (3) protrudes from the front end portion (21) of the housing (2) into the combustion chamber (61) for transmitting a combustion pressure in the combustion chamber (61);
a load detecting section (4) disposed between the housing (2) and the pressure transmitting member (3) for detecting variations in load acting between the housing (2) and the load transmitting member (3); and
a seal member (5) fixed to the housing (2) at a position forward of the load detecting section (4) and sealing a clearance (11) between the housing (2) and the pressure transmitting member (3), wherein the seal member (5) is not fixed to the pressure transmitting member (3).

2. A combustion pressure sensor according to claim 1, wherein the seal member (5) is made of stainless steel.

3. A combustion pressure sensor according to claim 1, wherein the seal member (5) defines together with the pressure transmitting member (3) a very small clearance (12) forming a path interconnecting the combustion chamber (61) and the axial hole (22) of the housing (2).

4. A combustion pressure sensor according to claim 3, wherein the very small clearance (12) has at lest one bent portion (121) disposed in the path interconnecting the combustion chamber (61) and the axial hole (22) of the housing (2).

5. A combustion pressure sensor according to claim 3, wherein the very small clearance (12) is less than or equal to 20 µm.

6. A combustion pressure sensor according to claim 1, wherein the seal member (5) is in contact with the pressure transmitting member (3).

7. A combustion pressure sensor according to claim 6, wherein a contact pressure between the seal member (5) and the pressure transmitting member (3) is set to be low enough to allow sliding movement of the pressure transmitting member (3) relative to the housing (2).

8. A combustion pressure sensor according to claim 1, wherein the seal member (5) has a resilient portion (53) urged into pressure contact with the pressure transmitting member (3).

9. A combustion pressure sensor according to claim 8, wherein the resilient portion (53) has a resiliency determined such that a contact pressure acting between the seal member (5) and the pressure transmitting member (3) provides a hermetic seal between the seal member (5) and the pressure transmitting member (3) while allowing smooth sliding movement of the pressure transmitting member (3) relative to the housing (2).

10. A combustion pressure sensor according to claim 1, wherein the seal member (5) has a bellows-shaped portion (54) at a part thereof.

11. A combustion pressure sensor according to claim 10, wherein the seal member (5) further has a sleeve-like sealing portion (51) facing an outer circumferential surface of the pressure transmitting member (3), and an annular attachment portion (52) integral with and extending radially outward from an end of the sleeve-like sealing portion (51), the attachment portion(52) being fixed to the housing (2), the sleeve-like sealing portion (51) having a straight part (511) at an opposite end thereof, the bellows-shaped portion (54) being formed as an integral part of the sleeve-like sealing portion (51) and disposed between the annular attachment portion (52) and the straight part (511), the straight part (51) being in contact with the outer circumferential surface of the pressure transmitting member (3).

12. A combustion pressure sensor according to claim 11, wherein a contact pressure between the straight part (511) of the seal member (5) and the pressure transmitting member (3) is set to be low enough to allow sliding movement of the pressure transmitting member (3) relative to the housing (2).
